# EUROPÄISCHE PATENTSCHRIFT

(11) **EP 1 678 010 B1**
(45) Veröffentlichungstag und Bekanntmachung des Hinweises auf die Patenterteilung: **06.02.2008**
(21) Anmeldenummer: 04762451.5
(22) Anmeldetag: 22.07.2004
(51) Int. Cl.: B60R 21/013, B60R 21/0134, B60R 21/0136

(54) **VORRICHTUNG ZUR ANSTEUERUNG VON PERSONENSCHUTZMITTELN**
DEVICE FOR CONTROLLING OCCUPANT AND PEDESTRIAN PROTECTION MEANS
DISPOSITIF DE COMMANDE DE MOYENS DE PROTECTION DE PERSONNES

(30) Priorität: 17.10.2003 DE 10348386
(43) Veröffentlichungstag der Anmeldung: 12.07.2006
(73) Patentinhaber: ROBERT BOSCH GMBH, 70442 Stuttgart (DE)
(72) Erfinder: GROEGER, Ulrike, 70499 Stuttgart (DE); KUTTENBERGER, Alfred, 71696 Moeglingen (DE); THEISEN, Marc, 74354 Besigheim (DE); BUNSE, Michael, 71665 Vaihingen/Enz (DE)
(86) Internationale Anmeldenummer: PCT/DE2004/001601
(87) Internationale Veröffentlichungsnummer: WO 2005/044635

(56) Entgegenhaltungen:
- EP-A- 0 914 992
- DE-A- 10 247 670
- DE-A- 19 957 187
- DE-C- 10 140 119

## Beschreibung

### Stand der Technik

Die Erfindung geht aus von einer Vorrichtung zur Ansteuerung von Personenschutzmitteln nach der Gattung des unabhängigen Patentanspruchs.

Aus EP 914 992 A1 ist es bekannt, ein Fußgängerschutzsystem an Fahrzeugen vorzusehen, wobei hier eine Fronthaube bei einem Fußgängeraufprall aufgestellt wird.

Aus DE 10247670 A1, als nächstliegender Stand der Technik betrachtet, ist es bekannt, Daten von Aufprallsensoren und von einer Fernerfassungseinrichtung bei einer Bewertung durch ein Steuermodul wechselseitig zu berücksichtigen. Auf Grundlage dieser Bewertung stellt ein Steuermodul einen Aktivierungsplan für die Schutzeinrichtungen auf und aktiviert anschließend die verschiedenen Schutzeinrichtungen, falls erforderlich, entsprechend diesem Aktivierungsplan.

### Vorteile der Erfindung

Die erfindungsgemäße Vorrichtung zur Ansteuerung von Personenschutzmitteln mit den Merkmalen des unabhängigen Patentanspruchs hat demgegenüber den Vorteil, dass ein Fußgängerschutzalgorithmus und ein Precrashalgorithmus derart miteinander verknüpft werden, dass die Ansteuerung von Personenschutzmitteln, die durch diese beiden Algorithmen erfolgt, verbessert werden. Insbesondere werden dabei die Sensorsignale und auch die Zwischenergebnisse gegeneinander ausgetauscht. Damit kommt es zu einer besseren, zielgenaueren und zeitverbesserten Ansteuerung von Personenschutzmitteln. Unter den Personenschutzmitteln sind hier die Insassenrückhaltemittel wie Airbag, Gurtstraffer oder Überrollbügel zu verstehen, aber auch Fußgängerschutzmittel wie Außenairbags oder die anstellbare Fronthaube.

Insbesondere die Bestimmung des Startzeitpunkts der Algorithmen wird durch die erfindungsgemäße Vorrichtung verbessert. Vom Precrashsystem wird der vorhergesagte Aufprallzeitpunkt dem Fußgängerschutzalgorithmus zur Verfügung gestellt. Damit ist es dem Fußgängerschutzsystem möglich, dem Precrashalgorithmus im Gegenzug den vom Fußgängerschutzsystem präziser, zuverlässiger und robuster ermittelten Kontaktzeitpunkt als Eingangsgröße zu liefern. Dieser so berechnete Kontaktzeitpunkt stimmt im allgemeinen besser, als der vom Precrashsystem vorhergesagte mit dem tatsächlichen überein. Daraus resultiert für das Precrashsystem eine verbesserte Berechnung der Aufprallgeschwindigkeit. Diese kann wieder an das Fußgängerschutzsystem geliefert werden, so dass sich letztlich durch die gegenseitige Ausnutzung der Information für beide Systeme eine präzisere, robustere und damit zuverlässigere Auslöseentscheidung ergibt.

Die Aufprallgeschwindigkeit ist insbesondere für die Bestimmung der Aufprallschwere von großem Nutzen. Diese bestimmt dann, wie stark oder welche Personenschutzmittel aktiviert werden müssen. Der Fußgängerschutzalgorithmus kann natürlich auch bei einem anderen Aufprall, beispielsweise auf ein anderes Fahrzeug oder auf eine Wand, verwendet werden. Werden solche Objekte jedoch erkannt, werden Fußgängerschutzmittel nicht aktiviert, sondern lediglich die Insassenrückhaltemittel. Die erfindungsgemäße Vorrichtung stellt durch den Datenaustausch zwischen dem Precrashalgorithmus und dem Fußgängerschutzalgorithmus eine verbesserte Aufprallgeschwindigkeit diesen beiden Algorithmen zur Verfügung.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Personenschutzmitteln möglich.

Besonders vorteilhaft ist, dass das Signal des Precrashalgorithmus eine erste Schätzung des Aufprallzeitpunkts angibt. Mit dieser Schätzung kann dann der Fußgängerschutzalgorithmus seinen Startpunkt besser bestimmen, um beispielsweise die Rauschschwelle entsprechend abzusenken. Wie oben dargestellt, gibt dann der Fußgängerschutzalgorithmus den Aufprallzeitpunkt dem Precrashalgorithmus zurück, so dass dieser die Aufprallgeschwindigkeit besser bestimmen kann. Auch der Precrashalgorithmus kann in Abhängigkeit vom Aufprallzeitpunkt seine Rauschschwelle senken. Da man durch die Umfeldanalyse weiss, dass es sich bei dem anfänglich schwachen Beschleunigungssignal nicht um ein Rauschen, sondern um ein von einem Aufprall verursachten Signal handelt, kann die Rauschschwelle herabgesetzt werden, wodurch der Beginn des Precrashalgorithmus näher am Kontaktzeitpunkt liegt.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung,
- Figur 2: ein Informationsablaufdiagramm und
- Figur 3: ein Zeitablaufdiagramm.

### Beschreibung

Es werden bereits Precrash- und Fußgängerschutzsysteme entwickelt, die jedoch unabhängig voneinander arbeiten. Das Fußgängerschutzsystem wertet beispielsweise das Signal von einer Kontaktsensorik aus, um zu erkennen, ob es sich bei dem getroffene Objekt um eine Person, also beispielsweise um einen Fußgänger, Inlineskater oder Fahrradfahrer oder um ein anderes Objekt, wie beispielsweise eine Mülltonne, ein Schild oder einen Baum handelt. Danach bestimmt sich, ob das Fußgängerschutzsystem aktiviert wird, oder nicht. Das Precrashsystem, beispielsweise mit PMD- (Photonic Mixing Device), Ultraschall-, Radar-, Lidar- oder Videosensoren und beliebigen Kombinationen daraus, sensiert unabhängig von der Fußgängerschutzsensorik das Umfeld vor dem Fahrzeug. Falls ein Objekt in das Beobachtungsfeld eintritt, dann sagt das Precrashsystem den Aufprallzeitpunkt voraus, wobei die Parameter Aufprallgeschwindigkeit, Aufprallversatz und/oder Aufprallwinkel ebenfalls angegeben werden. Diese vorhergesagten Daten werden dann als Eingangsgrößen für die Berechnung der Auslöseentscheidung der Rückhaltemittel benutzt.

Erfindungsgemäß wird nun vorgeschlagen, dass der Precrashalgorithmus und der Fußgängeralgorithmus Daten miteinander austauschen, um die Leistungsfähigkeit beider Algorithmen zu steigern und damit zu einer verbesserten Auslöseentscheidung für die Personenschutzmittel zu kommen.

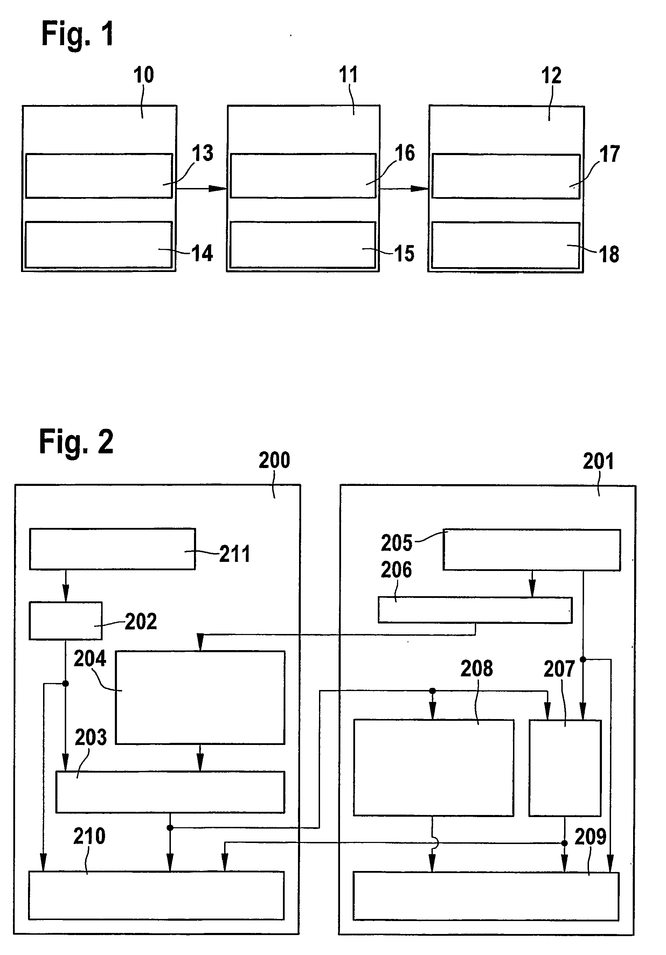

Figur 1 zeigt in einem Blockdiagramm den grundlegenden Aufbau der erfindungsgemäßen Vorrichtung. Eine Sensorik 10 weist eine Fußgängerschutzsensorik 13 und eine Precrashsensorik 14 auf. Die Fußgängerschutzsensorik 13 ist vorzugsweise in der Fahrzeugfront verbaut. Dies können beispielsweise Beschleunigungssensoren oder Kontaktsensoren wie ein Piezokabel oder ein Schlauch sein. Auch optische Sensoren sind hier möglich. Die Precrashsensorik 14 kann verschiedene Radarsensoren, Ultraschallsensoren, Lichtsensoren oder Videosensoren aufweisen. Auch beliebige Kombinationen dieser Sensoren sind hier möglich. Mit der Precrashsensorik 14 wird das Umfeld des Fahrzeugs überwacht. Die Sensorik 10 ist über einen Datenausgang mit einer Steuereinheit 11 verbunden. In der Steuereinheit 11 wird auf einem Prozessor der Fußgängerschutzalgorithmus 16 und der Precrashalgorithmus 15 gerechnet. Darüber hinaus ist es weiterhin möglich, dass unterschiedliche Steuergeräte für das Fußgängerschutzsystem und das Precrashsystem vorliegen. Der Einfachheit halber wird hier die Sensorik und der Algorithmus für die Auswertung von Beschleunigungssignalen nicht dargestellt. Auch eine Insassensensorik ist hier der Einfachheit halber weggelassen.

Der Fußgängerschutzalgorithmus 16 bestimmt, ob Fußgängerschutzmittel wie Außenairbags oder die anstellbare Fronthaube oder andere Aktuatoren in Abhängigkeit von den Signalen der Fußgängerschutzsensorik und der Precrashsensorik angesteuert werden. Der Precrashalgorithmus wird für die Ansteuerung der Insassenrückhaltemittel 18 vorgesehen. Daher ist die Steuereinheit 11 mit der Aktuatorik 12 verbunden, die die Fußgängerschutzaktuatorik 17 und die Insassenrückhaltemittel 18 umfasst. Erfindungsgemäß tauschen nun der Fußgängerschutzalgorithmus 16 und der Precrashalgorithmus 15 Daten miteinander aus, um die Leistungsfähigkeit beider Algorithmen zu verbessern. Der Precrashalgorithmus 15 macht dabei den Anfang, in dem er dem Fußgängerschutzalgorithmus den vorhergesagten Aufprallzeitpunkt überträgt. Der Fußgängerschutzalgorithmus 16 übergibt dann den durch den Kontakt gemessenen Aufprallzeitpunkt an den Precrashalgorithmus. Damit ist es dem Precrashalgorithmus 15 insbesondere möglich, die Aufprallgeschwindigkeit sehr exakt zu bestimmen. Aus der Aufprallgeschwindigkeit und dem Beschleunigungssignal sind der Crashtyp und die Crashschwere ableitbar. Damit können die Auslösezeitpunkte für die Insassenrückhaltemittel 18 sehr genau bestimmt werden. Bei einem leichten Crash können die Auslösezeitpunkte später als bei einem schweren Crash liegen. Auch die Stärke der Rückhaltemittel kann so, wenn möglich, entsprechend der Schwere des Unfalls eingestellt werden.

Das Precrashsystem beobachtet mit der Precrashsensorik 14 das Umfeld des Fahrzeugs. Falls ein Objekt vor dem Crash von der Sensorik erfasst wird, wird der Kontaktzeitpunkt zwischen Objekt und Fahrzeug vorhergesagt. Dieser vom Precrashsystem vorhergesagte Kontaktzeitpunkt wird dem Fußgängerschutzsystem, und dabei insbesondere dem Fußgängerschutzalgorithmus 16, zugeführt, so dass im Fußgängerschutzalgorithmus ab diesem Zeitpunkt die Rauschschwelle reduziert werden kann und dass der Fußgängerschutzalgorithmus 16 gestartet werden kann. Eine reduzierte Rauschschwelle bietet gegenüber einer nicht reduzierten den Vorteil, dass der über die reduzierte Rauschschwelle ermittelte Kontaktzeitpunkt im Allgemeinen besser dem tatsächlichen entspricht. Durch diese zusätzliche Ausnutzung des Kontaktsignals ergibt sich ein berechneter Kontaktzeitpunkt, der im Allgemeinen besser, als der vom Precrashsystem vorhergesagte mit dem tatsächlichen übereinstimmt.

Dieser vom Fußgängerschutzalgorithmus 16 ermittelte Kontaktzeitpunkt wird an den Precrashalgorithmus 15 übergeben, um damit entweder direkt den Precrashalgorithmus 15 zu starten, oder um damit die für den Precrashalgorithmus 15 relevante Rauschschwelle zu reduzieren. Des weiteren wird der vom Fußgängerschutzalgorithmus berechnete Kontaktzeitpunkt dazu benutzt, um die vom Precrashsystem vorhergesagte Relativgeschwindigkeit zu präzisieren. Aus der Kenntnis der prädizierten Relativgeschwindigkeit und der Kenntnis des Abstandes ist eine Prädiktion des Aufprallzeitpunktes möglich. Liegt der tatsächliche gemessene Kontaktzeitpunkt davor bzw. danach, kann die prädizierte Relativgeschwindigkeit entsprechend korrigiert werden. Hier hilft die Information des Kontaktsensors aus der Fußgängerschutzsensorik 13. Die verbesserte Information über die Relativgeschwindigkeit wird sowohl vom Precrash-, als auch vom Fußgängerschutzalgorithmus 15, 16 verwendet, um eine robustere und präzisere Auslöseentscheidung für die Fußgängerschutzaktuatorik 17 und die Insassenrückhaltemittel 18 zu erhalten.

Figur 2 zeigt in einem Informationsflussdiagramm den Ablauf, den die erfindungsgemäße Vorrichtung durchläuft. Es liegen hier zwei Systeme vor, zum einen das Fußgängerschutzsystem 200 und das Precrashsystem 201. Das Precrashsystem 201 ermittelt mit der Precrashsensorik 14 in Verfahrensschritt 205 ein Objekt und sagt daraus in Verfahrensschritt 206 einen Aufprallzeitpunkt voraus. Dieses Datum wird dem Fußgängerschutzsystem 200 und dabei dem Fußgängerschutzalgorithmus 16 zugeführt.

Im Verfahrensschritt 204 startet damit der Fußgängerschutzalgorithmus 16, wobei hier auch eine Senkung der Rauschschwelle für den Fußgängerschutzalgorithmus 16 vorgenommen werden kann. Über einen Kontaktsensor 211, beispielsweise einen piezoelektrischen Sensor, wird ein Kontaktsignal 202 erzeugt, das den Aufprall des Objekts bzw. der Person anzeigt. Dieses Signal und die vorhergesagte Aufprallzeit wird in Verfahrensschritt 203 vom Fußgängerschutzalgorithmus dazu benutzt, um die Rauschschwelle zu diesem Zeitpunkt abzusenken und um dadurch den Aufprallzeitpunkt genauer zu bestimmen. Dieses Datum, der Aufprallzeitpunkt, wird wieder dem Precrashsystem 201 zurückgeführt. Damit kann im Verfahrensschritt 208 eine Reduktion der Rauschschwelle vorgenommen werden und der Precrashalgorithmus 15 starten. Insbesondere kann damit in Verfahrensschritt 207 eine verbesserte Aufprallgeschwindigkeit bestimmt werden. Dabei werden natürlich auch die Daten vom Precrashsensor 205 verwendet. Der Precrashalgorithmus bestimmt dann in Verfahrensschritt 209 die Ansteuerung der Insassenrückhaltemittel 18, wobei das Signal der Precrashsensorik 14 aus Verfahrensschritt 205 und die verbesserte Relativgeschwindigkeit aus Verfahrensschritt 207 berücksichtigt werden. Die Relativgeschwindigkeit aus Verfahrensschritt 207 wird auch dem Fußgängerschutzalgorithmus wieder zurückgegeben, um in Verfahrensschritt 210 die Fußgängerschutzmittel anzusteuern. In diese Ansteuerung geht jedoch auch der Aufprallzeitpunkt aus Verfahrensschritt 203 und das Kontaktsignal aus Verfahrensschritt 202 ein.

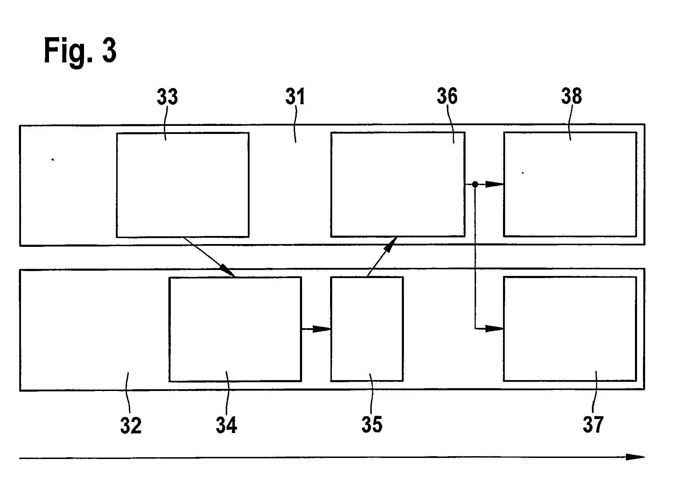

Figur 3 zeigt in einem Ablaufdiagramm als Funktion der Zeit den Austausch der Daten und die Ansteuerung der Rückhaltemittel. Es ist hier lediglich die Abszisse 30 eingetragen, die den Verlauf der Zeit anzeigt. Im oberen Balken 31 wird der Precrashalgorithmus 15 dargestellt und im unteren Balken 32 der Fußgängerschutzalgorithmus 16. Zunächst wird zum Zeitpunkt 33 vom Precrashalgorithmus 15 der Aufprallzeitpunkt vorhergesagt. Dies wird dem Fußgängerschutzalgorithmus 16 zugeführt, so dass er damit seine Rauschschwelle senken kann. Dies erfolgt zum Zeitpunkt 34. Daraus bestimmt zum Zeitpunkt 35 der Fußgängerschutzalgorithmus 16 den Aufprallzeitpunkt, wobei er hier auch das Kontaktsignal der Fußgängerschutzsensorik berücksichtigt. Der Aufprallzeitpunkt wird dann in Block 36 wiederum dem Precrashalgorithmus 15 zugeführt, der damit seine Rauschschwelle senken kann und die Aufprallgeschwindigkeit bestimmt. Mit der Aufprallgeschwindigkeit wird dann die Entscheidung über den Einsatz der Insassenrückhaltemittel bzw. den Einsatz der Fußgängerschutzmittel zum Zeitpunkt 37 bzw. 38 bestimmt.

## Patentansprüche

1. Vorrichtung zur Ansteuerung von Personenschutzmitteln (12) mit einer Umfeldsensorik (14) und einer Kontaktsensorik (13), **dadurch gekennzeichnet, dass** die Vorrichtung derart konfiguriert ist, dass die Vorrichtung in Abhängigkeit von einem vorhergesagten Aufprallzeitpunkt durch den Precrashalgorithmus (15) einen Fußgängerschutzalgorithmus (16) beeinflusst und in Abhängigkeit von einem durch den Fußgängerschutzalgorithmus (16) ermittelten Kontaktzeitpunkt, wobei der Fußgängeralgorithmus (16) dabei ein erstes Signal der Kontaktsensorik (13) berücksichtigt, den Precrashalgorithmus (15) beeinflusst, wobei die Vorrichtung in Abhängigkeit von einem zweiten Signal des Fußgängerschutzalgorithmus (16) und einem dritten Signal des Precrashalgorithmus (15) die Personenschutzmittel (12) ansteuert.

2. Vorrichtung nach einem der vorhergehenden Ansprüche, **dadurch gekennzeichnet, dass** der Precrashalgorithmus (15) in Abhängigkeit vom Kontaktzeitpunkt eine Aufprallgeschwindigkeit bestimmt.

3. Vorrichtung nach einem der vorhergehenden Ansprüche, **dadurch gekennzeichnet, dass** der Fußgängerschutzalgorithmus (16) eine erste Rauschschwelle in Abhängigkeit vom vorhergesagten Aufprallzeitpunkt einstellt.

4. Vorrichtung nach einem der vorherigen Ansprüche, **dadurch gekennzeichnet, dass** der Precrashalgorithmus (15) eine zweite Rauschschwelle in Abhängigkeit vom zweiten Signal einstellt.

5. Vorrichtung nach einem der vorhergehenden Ansprüche, **dadurch gekennzeichnet, dass** das erste Signal ein Kontaktsignal ist.

6. Verwendung der Vorrichtung nach einem der Ansprüche 1-5, **dadurch gekennzeichnet, dass** die Vorrichtung für den Precrashalgorithmus (15) und den Fußgängerschutzalgorithmus (16) die Aufprallgeschwindigkeit bereitstellt.

## Claims

1. Device for actuating personal protection means (12) having a surroundings sensor system (14) and a contact sensor system (13), **characterized in that** the device is configured in such a way that the device influences a pedestrian protection algorithm (16) as a function of a predicted impact time by means of the precrash algorithm (15), and as a function of a contact time which is determined by the pedestrian protection algorithm (16), wherein the pedestrian algorithm (16) takes into consideration here a first signal from the contact sensor system (13) and influences the precrash algorithm (15), wherein the device actuates the personal protection means (12) as a function of a second signal of the pedestrian protection algorithm (16) and a third signal of the precrash algorithm (15).

2. Device according to one of the preceding claims, **characterized in that** the precrash algorithm (15) determines an impact speed as a function of the contact time.

3. Device according to one of the preceding claims, **characterized in that** the pedestrian protection algorithm (16) sets a first noise threshold as a function of the predicted impact time.

4. Device according to one of the preceding claims, **characterized in that** the precrash algorithm (15) sets a second noise threshold as a function of the second signal.

5. Device according to one of the preceding claims, **characterized in that** the first signal is a contact signal.

6. Use of the device according to one of Claims 1 to 5, **characterized in that** the device makes available the impact speed for the precrash algorithm (15) and the pedestrian protection algorithm (16).

## Revendications

1. Dispositif de commande des moyens de protection de personnes (12) à l'aide d'un ensemble de capteurs d'environnement (14) et d'un ensemble de capteurs de contact (13),
**caractérisé en ce que**
le dispositif est configuré pour qu'en fonction d'un instant d'impact prévisible par un algorithme de pré-collision (15) on influence un algorithme de protection de piéton (16) et en fonction d'un instant de contact déterminé par l'algorithme de protection de piéton (16) selon lequel
l'algorithme de protection de piéton (16) tient compte d'un premier signal de l'ensemble des capteurs de contact (13) et influence l'algorithme de pré-collision (15),
le dispositif commande les moyens de protection de personnes (12) en fonction d'un second signal de l'algorithme de protection de piéton (16) et d'un troisième signal de l'algorithme de pré-collision (15).

2. Dispositif selon la revendication précédente,
**caractérisé en ce que**
l'algorithme de pré-collision (15) définit une vitesse de collision en fonction d'un instant de contact.

3. Dispositif selon l'une des revendications précédentes,
**caractérisé en ce que**
l'algorithme de protection de piéton (16) règle un premier seuil de bruit en fonction de l'instant de collision prévu.

4. Dispositif selon l'une quelconque des revendications précédentes,
**caractérisé en ce que**
l'algorithme de pré-collision (15) règle un second seuil de bruit en fonction du second signal.

5. Dispositif selon l'une des revendications précédentes,
**caractérisé en ce que**
le premier signal est un signal de contact.

6. Application du dispositif selon l'une des revendications 1 à 5,
**caractérisé en ce qu'**
il fournit la vitesse de collision pour l'algorithme de pré-collision (15) et l'algorithme de protection de piéton (16).
